# EUROPÄISCHE PATENTANMELDUNG

(11) **EP 2 664 236 A1**
(43) Veröffentlichungstag der Anmeldung: **20.11.2013**
(21) Anmeldenummer: 13163898.3
(22) Anmeldetag: 16.04.2013
(51) Int. Cl.: A01K 61/00

(54) **Netz, insbesondere für einen in einem Gewässer stationierbaren Korb oder Hülle für die Tierzucht**

(30) Priorität: 15.05.2012 CH 6892012
(71) Anmelder: Geobrugg AG, 8590 Romanshorn (CH)
(72) Erfinder: Dornbierer, Urs, 9404 Rorschacherberg (CH)
(74) Vertreter: Luchs, Willi

(57) **Zusammenfassung**

Ein Netz ist insbesondere für einen in einem Gewässer stationierbaren Korb oder Hülle vorgesehen, welche für den Tierzucht, wie Fisch-, Muschel- oder Weichtierzucht in Gewässern dient. Das Netz (20) ist aus Drähten, Seilen und/oder Litzen hergestellt und dabei aus Netzbahnen (21 bis 26) gebildet. Bei letzteren ist in Randbereichen (22') jeweils wenigstens ein abdeckendes Band (27, 28, 30, 37) angebracht, welches über einen Verbindungsteil (27') für ein dauerhaftes Zusammenfügen mit einer benachbarten Netzbahn (21 bis 26) verfügt. Damit wird ein dauerhaftes verstärktes Zusammenhalten der Netzbahnen und eine wesentliche Verstärkung des Netzes in vertikaler Richtung erreicht.

## Beschreibung

Die Erfindung bezieht sich auf ein Netz, insbesondere für einen in einem Gewässer stationierbaren Korb oder Hülle, welche für die Tierzucht, wie Fisch-, Muschel- oder Weichtierzucht in Gewässern vorgesehen sind, wobei das Netz aus metallenen Drähten, Seilen und/oder Litzen hergestellt ist.

Ein Netz gemäss der Druckschrift WO-A-2010/049089 ist als ein Drahtgeflecht ausgebildet, welches aus einzelnen wendelförmig oder ähnliche gebogenen Längselementen herstellbar ist, wobei die benachbarten Drähte jeweils zusammengeflochten sind. Die Längselemente sind aus metallenen Drähten oder ähnlichem hergestellt und sie bestehen vorteilhaft aus meerwasserfesten Stahl, welcher mit einer Antifouling-Oberfläche versehen ist, zum Beispiel mit Kupfer oder Kupferlegierungen beschichtet ist. Diese Netze sind beispielsweise durch Schäkel oder dergleichen aneinander befestigt. Damit müssten aber die gesamten Kräfte, die bei einem Sturm auf das Netz einwirken, von demselben aufgenommen werden, was örtlich zu temporären Überbelastungen führen kann.

Endseitig sind diese wendelförmigen Drähte zu Schlaufen gebogen bzw. zu Knoten verarbeitet. Nachteilig ist hierbei, dass die Enden der Drähte beispielsweise bei den Knoten leicht vorstehen und sich dadurch ein am Netz entlang schwimmender Fisch daran schürfen kann. Nachteilig ist ausserdem, dass sich diese Drahtenden beim Abrollen und bei den Montageprozessen gegenseitig respektive mit dem Netz verkrallen können, was zu erheblichem Mehraufwand führen kann.

Der vorliegenden Erfindung wurde daher die Aufgabe zugrundegelegt, ein Netz für einen Korb oder Hülle nach der eingangs erwähnten Gattung zu schaffen, bei welchem gewährleistet ist, dass die zusammengesetzten Netzbahnen auch bei hohen Belastungen insbesondere bei Sturm sicher zusammengehalten sind und ferner sich die darin gezüchteten Tiere nicht an dem Netz oder den Verbindungselementen verletzen, und dass darüberhinaus ein solcher Korb oder Hülle einfach montierbar ist. Ferner sollen die Netze zusammengerollt transportiert werden können. Erfindungsgemäss ist diese Aufgabe durch das Netz nach den Merkmalen des Anspruchs 1 gelöst.

Weitere vorteilhafte Einzelheiten dieses Netzes sind in den abhängigen Ansprüchen definiert.

Mit dieser erfindungsgemässen Bildung von Netzbahnen, bei welcher an den an Rändern wenigstens ein vorzugsweise über die gesamte Länge abdeckendes Band angebracht ist, welches ein Mittel für eine Verbindung mit einer benachbarten Netzbahn aufweist, wird ein dauerhaftes verstärktes Zusammenhalten der Netzbahnen und wesentliche Verstärkung des Netzes in vertikaler Richtung erreicht und damit eine insgesamt verbesserte Reissfestigkeit des Netzes erzielt, nebst dem, dass eine Verletzungsgefahr von im Korb oder in der Hülle befindlichen Tieren ausgeschlossen ist. Auch Raubtiere, wie Haifische, die von aussen gegen den Korb oder die Hülle stossen, können sich dabei kaum verletzen.

Nebst dieser Verbesserung der Verhinderung von Verletzungen kann aber dieses Netz im Rahmen der Erfindung sehr einfach montiert werden, indem diese mit den Bändern vorgefertigten Netzbahnen projektbezogen zusammengefügt und als komplettes Netz in einem Arbeitsgang in das Tragsystem ausgebracht werden kann.

Ausführungsbeispiele sowie weitere Vorteile der Erfindung sind nachfolgend anhand der Zeichnung näher erläutert. Es zeigt:
- Fig. 1: einen im Wasser befindlichen Korb mit erfindungsgemässen Netzbahnen in schematischer Seitenansicht;
- Fig. 2: eine teilweise schematisch dargestellte als Geflecht vorgesehene Netzbahn mit einem abdeckenden Band nach Fig. 1;
- Fig. 3: einen vergrösserten Schnitt der teilweise gezeigten Netzbahn und dem Band entlang der Linie II - II gemäss Fig. 2;
- Fig. 4: eine schematische Draufsicht einer Variante von zwei verbundenen Netzbahnen; und
- Fig. 5: eine schematische Draufsicht einer anderen Variante von zwei verbundenen Netzbahnen.

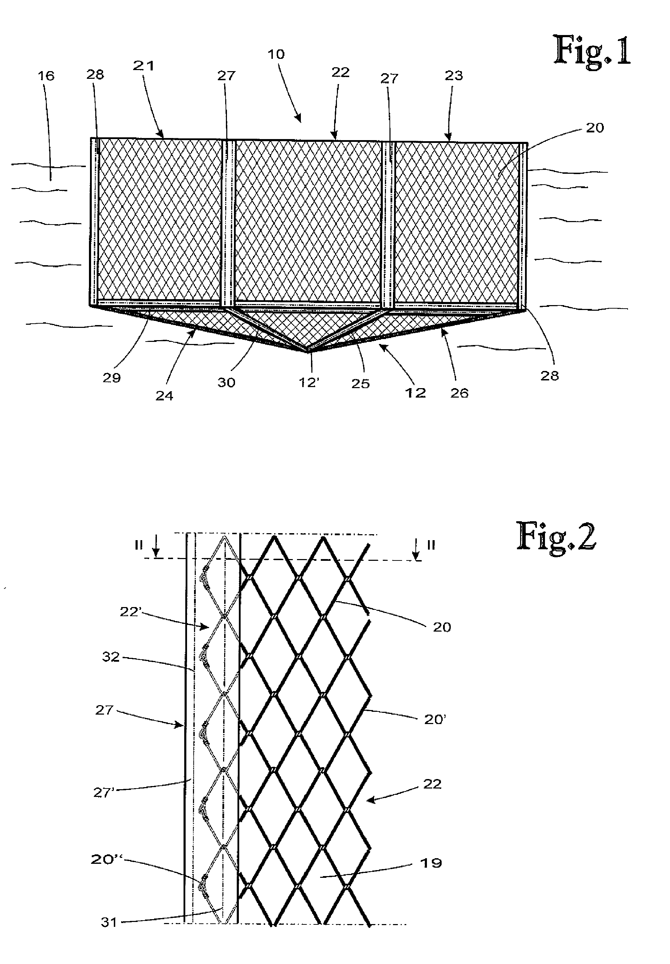

Fig. 1 zeigt einen schematisch veranschaulichten Korb 10, welcher im montierten Zustand im Wasser 16 befindlich ist und vorliegend insbesondere für den Fischzucht dienen soll. Der Korb 10 ist aus einem Netz 20 aus vorzugsweise hochfesten metallenen Drähten, Seilen und/oder Litzen hergestellt. Dieser Korb 10 kann im Querschnitt rechteckig, rund oder polygonförmig geformt sein. Zudem ist er vorteilhaft mit einem trichterförmigen Boden 12 ausgebildet, welcher in der Mitte 12' mit einer verschliessbaren Öffnung versehen ist. Damit sammelt sich der Schmutz in dem Korb 10 weitgehend in der Mitte 12' an und kann bei dieser Öffnung mit wenig Aufwand entfernt werden.

Erfindungsgemäss ist das aus metallenen Drähten, Seilen und/oder Litzen hergestellte Netz 20 aus mehreren Netzbahnen 21 bis 23 gebildet, bei welchen jeweils vorzugsweise über die gesamte Länge abdeckende Bänder 27, 28 angebracht sind, welche je einen Verbindungsteil 27' für ein dauerhaftes Zusammenfügen mit einer benachbarten Netzbahn 21 bis 23 aufweisen, wobei der Verbindungsteil 27' durch das über den jeweiligen Rand der Netzbahn 21 bis 23 vorstehende Band 27 selbst gebildet ist, wie dies aus Fig. 2 ersichtlich ist.

Die Bänder 27, 28, 29, 30 sind mit Vorteil aus einem wasserbeständigen reissfesten Material hergestellt, wie zum Beispiel aus einem Nylongewebe, einer PVC-Folie oder dergleichen. Sie könnten zur Verhinderung von Ablagerungen beschichtet sein.

Der Boden 12 des Korbes 10 ist ebenfalls aus segmentförmigen Netzbahnen 24, 25, 26 gebildet, welche erfindungsgemäss durch Bänder 30 miteinander und durch die weiteren Bänder 29 mit den Netzbahnen 21 bis 23 verbunden sind, so dass dieser Korb 10 seitlich und unten geschlossen ist.

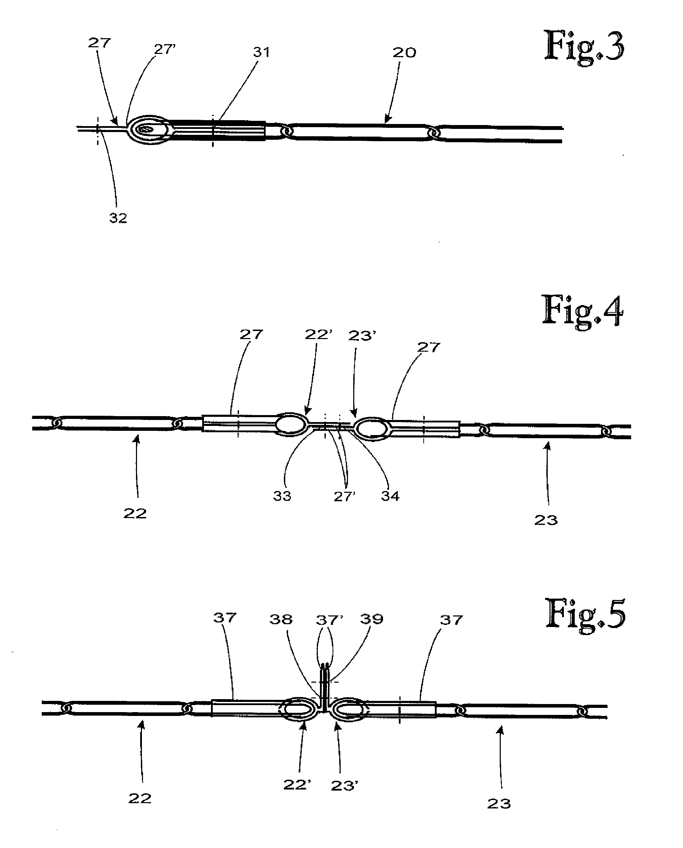

Gemäss Fig. 2 bzw. Fig. 3 ist das Band 27 zweiteilig ausgebildet, bei dem auf der Vorder- und Rückseite der Netzbahn 22 je ein Band zugeordnet ist, welche mittels über die gesamte Länge der Netzbahn 22 verlaufenden Nähte 31 miteinander verbunden sind.

Das Netz 20 ist als ein Drahtgeflecht ausgebildet, welches aus zusammengeflochtenen einzelnen wendelförmig oder ähnlichem gebogenen hochfesten metallenen Drähten 20' besteht, deren Enden an gegenüberliegenden Seiten verknotet oder verschlauft sind. Dies ist durch die miteinander gelenkig verbundenen Schlaufen 20" der Drähte 20' angedeutet.

Die Nähte 31 sind innerhalb der Maschen 19 des Drahtgeflechtes angebracht, so dass die Bänder zwischen der dreidimensionalen Struktur des Geflechtes zu liegen kommen, wie in Fig. 3 veranschaulicht ist. Zudem ist eine weitere durchgehende Naht 32 beim Verbindungsteil 27' des Bandes 27 über die gesamte Länge der Netzbahn 22 vorgesehen. Vorteilhaft sind diese Nähte 32 durch mehrere über einen Teil der Netzbahn vernähten Fäden oder dergleichen hergestellt, damit sich bei einem Nahtriss nicht die Naht über die gesamte Länge der Netzbahn löst.

Gemäss Fig. 4 sind die Bänder 27 als die Ränder 22', 23' der Netzbahnen 22, 23 umgreifende Taschen angeordnet und deren zum jeweiligen Rand 22', 23' vorstehenden Verbindungsteile 27' sind durch zwei nebeneinander geführte Nähte 33, 34 aneinander befestigt, wobei diese Verbindungsteile 27' in der gleichen Ebene wie die Netzbahnen 22, 23 verlaufen.

Fig. 5 zeigt eine Variante einer Verbindung der Netzbahnen 22, 23, bei welcher nur ein um den jeweiligen Randbereich 22', 23' der Netzbahn gebogenes, die Tasche bildendes Band 37 mit das Netz beidseitig abdeckenden Bandteile vorgesehen ist, das wiederum jeweils einen vorstehenden Verbindungsteil 37' aufweist. Diese Verbindungsteile 37' können gegen das Innere oder das Äussere des Korbes abgebogen und durch eine oder mehrere Nähte 38, 39 aneinander befestigt werden. Demzufolge sind die Randbereiche 22', 23' der Netzbahnen annähernd bündig aneinanderstossend angeordnet, wodurch das Metallnetz annähernd durchgehend verläuft.

Für eine einfache Montage der Netzbahnen 21 bis 26 werden die aufgerollten Netzbahnen 21 bis 26 von einem Schiff aus mit einem Kran herabgelassen. Beim Abrollen können dann die vorgefertigten Netzbahnen mit den bei diesen angebrachten Bändern 27, 28, 30 miteinander vernäht werden. Es könnten aber im Prinzip auch die bereits vernähten Netzbahnen als gesamtes Netz an der Trageinrichtung des Korbes befestigt werden.

Die Erfindung ist mit den oben erläuterten Ausführungsbeispielen ausreichend dargetan. Sie könnte aber noch durch weitere Varianten erläutert sein. So könnten die Netzbahnen horizontal um den Korb herum geführt sein, folglich die den oberen Korbrand bildenden Seiten erfindungsgemäss ebenfalls mit dem Band abgedeckt wären, damit die Enden der metallenen Drähte, Seile und/oder Litzen sicher abgedeckt wären.

Anstelle eines Vernähens der Bänder könnten diese auch durch Nieten, Klammern oder durch Verschweissung aneinander befestigt sein. Bei einem Verschweissen könnten als Bänder Kunststoff-Folien, zum Beispiel PVC-Folien (Lastwagenblachen) verwendet werden, die mit einfachen Mitteln zusammengeschweisst werden können, wobei diese jedoch vorteilhaft mit den Netzen vernäht wären.

Als Verbindungsteil könnten auch eine Anzahl von über das jeweilige Band angebrachte Schnüre bzw. schmale Bänder verwendet werden, welche mit entsprechenden Schnüren beim benachbarten Verbindungsteil verknüpft würden.

Die Ränder mit den Bändern der Netzbahnen könnten auch übereinander gelegt und dann auf diese Weise zusammen verbunden sein, wobei dann das abdeckende Band gleichsam den Verbindungsteil bilden würde.

Als weitere Variante könnte zumindest bei einem Verbindungsteil 27', 37' mit zwei zusammenfügbaren Bändern 27, 28, 30, 37 ein lösbarer Verschluss, zum Beispiel ein Reissverschluss, angebracht sein, so dass zumindest zwei benachbarte Netzbahnen 21, 22, 23 voneinander trennbar wären bzw. der Boden 12 zweigeteilt werden könnte. Damit könnten die Netzbahnen bis auf diese eine Stelle miteinander verbunden und erst beim Montieren im Wasser könnten dann diese beiden Enden der Netzbahnen mittels dieses Reissverschlusses aneinander befestigt werden. Damit könnte diese aus einer Anzahl von solchen Netzbahnen bestehende Seitenwand in einem Montagegebäude zusammengenäht und aufgerollt zu dem Montageplatz gebracht werden. Ebenso könnte der Boden 12 mittels einem oder mehreren Reissverschlüssen im Wasser geschlossen werden, was zu einer einfacheren Montage des gesamten Korbes 10 beitragen würde.

Diese lösbaren Verschlüsse sind vorteilhaft nach dem Schliessen mit einer Schutzabdeckung, beispielsweise einer Lasche oder ähnlichem, geschützt, so dass diese Verschlüsse bei einem Herausnehmen des Korbes wieder sicher gelöst werden können und genauso eine einfache und schnelle Demontage desselben ermöglichen.

Selbstverständlich könnten auch mehrere solcher lösbaren Schnellverschlüsse für ein Netz vorgesehen sein, damit dieses in verschiedene Teilstücke unterteilbar wäre.

Eine Hülle insbesondere für die Muschelzucht ist beispielsweise rund ausgebildet und ebenfalls Netzbahnen analog wie bei einem Korb vorgesehen, welche entsprechend nach dem erfindungsgemässen Verbinden mit Bändern zusammengefügt sind.

Dieses Netz eignet sich im Rahmen der Erfindung insbesondere für jeglichen Weichtierzucht in Meeren mit Meersalz bzw. Seen oder Flüsse mit Süsswasser.

Je nach Anwendungsbedingungen können auch mehrere Bahnen zumindest teilweise übereinander gelegt werden, z.B. auch als örtliche Verstärkung.

Diese Bänder können bedarfsweise mit einer Antifouling-Beschichtung oder Imprägnierung versehen sein, zum Beispiel mit Kupfer oder Kupferlegierungen

Ebenfalls ist es möglich, unterschiedliche Netz- und Geflechtstypen mittels erfindungsgemässen Bändern zu verbinden (z.B. Kunststoffnetze und Drahtgeflechte).

Analog können auch Verbindungen von Drahtgeflechten mit Tragseilen, Verbindungselementen, Schwimmkörpern oder dergleichen erzeugt werden.

Selbstverständlich können diese Bänder je nach Anwendung auch nur über einen Teil einer Netzbahn angeordnet sein.

## Patentansprüche

1. Netz, insbesondere für einen in einem Gewässer stationierbaren Korb oder Hülle, welche für den Tierzucht, wie Fisch-, Muschel- oder Weichtierzucht in Gewässern vorgesehen sind, wobei das Netz (20) aus Drähten, Seilen und/oder Litzen hergestellt ist, **dadurch gekennzeichnet, dass**
das Netz (20) aus Netzbahnen (21 bis 26) gebildet ist, bei welchen in Randbereichen (22') jeweils wenigstens ein vorzugsweise über die gesamte Länge abdeckendes Band (27, 28, 30, 37) angebracht ist, welches über einen Verbindungsteil (27', 37') für ein dauerhaftes Zusammenfügen mit einer benachbarten Netzbahn (21 bis 26) verfügt.

2. Netz nach Anspruch 1, **dadurch gekennzeichnet, dass** die ein- oder mehrteiligen Bänder (27, 28, 29, 30, 37) als die Randbereiche der Netzbahnen (21 bis 26) umgreifende Taschen angeordnet und am Netz (20) durch Vernähen befestigt sind.

3. Netz nach Anspruch 1 oder 2, **dadurch gekennzeichnet, dass** der Verbindungsteil (27') des Bandes (27) für dieses Zusammenfügen mit der benachbarten Netzbahn (21 bis 26) durch ein über den jeweiligen Rand der Netzbahn vorstehender Teil des Bandes (27) selbst gebildet ist.

4. Netz nach Anspruch 3, **dadurch gekennzeichnet, dass** nur ein um den jeweiligen Rand der Netzbahn (21 bis 26) gebogenes, die Tasche bildendes Band (37) vorgesehen ist, dessen das Netz beidseitig abdeckenden Bandteile miteinander vernäht sind.

5. Netz nach einem der vorhergehenden Ansprüche 1 bis 3, **dadurch gekennzeichnet, dass** vor- und rückseitig beim jeweiligen Rand der Netzbahn jeweils ein Band vorgesehen ist, welche miteinander vernäht sind.

6. Netz nach einem der vorhergehenden Ansprüche 1 bis 5, **dadurch gekennzeichnet, dass** das Netz (20) als ein Drahtgeflecht ausgebildet ist, welches aus zusammengeflochtenen einzelnen wendelförmig oder ähnlichem gebogenen metallenen Drähten (20'), Seile und/oder Litzen besteht, deren Enden an gegenüberliegenden Seiten verknotet oder geschlauft und von den Bändern (27, 28, 30) abgedeckt sind.

7. Netz nach Anspruch 6, **dadurch gekennzeichnet, dass** bei der jeweiligen Netzbahn (21 bis 26) an den an gegenüberliegenden Rändern befindlichen Enden der metallenen Drähte, Seile und/oder Litzen jeweils wenigstens ein über die gesamte Länge abdeckendes Band (27, 28, 30) angebracht ist.

8. Netz nach einem der vorhergehenden Ansprüche 1 bis 7, **dadurch gekennzeichnet, dass** die Bänder (27, 28, 30) annähernd über die gesamte Länge der Netzbahn in den durch die metallenen Drähte, Seile und/oder Litzen gebildeten Maschen (19) annähernd durchgehend miteinander vernäht sind.

9. Netz nach einem der vorhergehenden Ansprüche 1 bis 8, **dadurch gekennzeichnet, dass** die Nähte bei den Bändern durch mehrere über einen Teil der Netzbahn vernähten Fäden oder dergleichen hergestellt sind, damit sich bei einem Nahtriss nicht die Naht über die gesamte Länge der Netzbahn löst.

10. Netz nach einem der vorhergehenden Ansprüche 1 bis 9, **dadurch gekennzeichnet, dass** die Bänder aus einem wasserbeständigen reissfesten Material hergestellt sind, wie zum Beispiel aus einem Nylongewebe und/oder aus einer verschweissbaren PVC-Kunststofffolie.

11. Netz nach einem der vorhergehenden Ansprüche 1 bis 10, **dadurch gekennzeichnet, dass** zumindest bei einem Verbindungsteil (27', 37') mit zwei zusammenfügbaren Bändern (27, 28, 30, 37) ein lösbarer Verschluss, zum Beispiel ein Reissverschluss, angebracht ist, so dass die beiden benachbarten Netzbahnen voneinander trennbar sind.

12. Korb oder Hülle mit einem Netz nach einem der vorhergehenden Ansprüche 1 bis 9, **dadurch gekennzeichnet, dass** der Korb oder die Hülle mehrere nebeneinander angeordnete Netzbahnen mit den an diesen angebrachten Bändern umfasst, welche zum Verbinden der Netzbahnen miteinander durch Vernähen befestigt sind.

13. Korb nach Anspruch 12, **dadurch gekennzeichnet, dass** der Boden (12) aus segmentförmigen Netzbahnen (24, 25, 26) gebildet ist, welche durch Bänder (30) miteinander und durch die weiteren Bänder (29) mit den seitlichen Netzbahnen (21, 22, 23) verbunden sind, so dass dieser Korb (10) seitlich und unten geschlossen ist.

14. Korb nach Anspruch 12 oder 13, **dadurch gekennzeichnet, dass** zumindest bei einem Band (29, 30) ein lösbarer Verschluss, zum Beispiel ein Reissverschluss, vorgesehen ist, durch welches der Boden (12) zweigeteilt werden kann.
